# EUROPÄISCHE PATENTSCHRIFT

(11) **EP 1 200 510 B1**
(45) Veröffentlichungstag und Bekanntmachung des Hinweises auf die Patenterteilung: **08.11.2006**
(21) Anmeldenummer: 00992451.5
(22) Anmeldetag: 12.07.2000
(51) Int. Cl.: C08J 5/04, C08L 23/10, B29C 55/14

(54) **PAPIERÄHNLICHE KUNSTSTOFFOLIE**
PAPER-TYPE PLASTIC FILM
PELLICULE PLASTIQUE DE TYPE PAPIER

(30) Priorität: 15.07.1999 DE 19932417
(43) Veröffentlichungstag der Anmeldung: 02.05.2002
(73) Patentinhaber: Trespaphan GmbH, 66539 Neunkirchen (DE)
(72) Erfinder: HÜTT, Detlef, 66265 Heusweiler (DE); DRIES, Thomas, 55270 Schwabenheim (DE); LAUER, Albert, 66538 Neunkirchen (DE)
(74) Vertreter: Kremer, Viola
(86) Internationale Anmeldenummer: PCT/EP2000/006614
(87) Internationale Veröffentlichungsnummer: WO 2001/038425

(56) Entgegenhaltungen:
- US-A- 3 903 234
- US-A- 4 123 476
- US-A- 4 892 763
- DATABASE WPI Section Ch, Week 199832 Derwent Publications Ltd., London, GB; Class A13, AN 1998-371138 XP002167134 & JP 10 147676 A (DAICEL CHEM IND LTD), 2. Juni 1998 (1998-06-02) & EP 0 940 437 A (DAICEL CHEM IND LTD) 2. Juni 1998 (1998-06-02)
- DATABASE WPI Section Ch, Week 199913 Derwent Publications Ltd., London, GB; Class A17, AN 1999-148634 XP002167064 & JP 11 012369 A (NITTO DENKO CORP), 19. Januar 1999 (1999-01-19)

## Beschreibung

Die vorliegende Erfindung betrifft synthetisches Papier aus einer coextrudierten, biaxial orientierten Kunststoffolie mit verbesserter Einreißbarkeit und kontrollierbarer Weiterreißbarkeit. Die Erfindung betrifft ferner ein Verfahren zur Herstellung des synthetischen Papiers.

Der Erfolg biaxial orientierter Kunststoffolien, insbesondere von Folien aus thermoplastischen Polymeren und speziell der biaxial orientierten Polypropylenfolien beruht im wesentlichen auf ihren hervorragenden mechanischen Festigkeitseigenschaften in Verbindung mit einem vergleichsweise geringen Gewicht, guten Sperreigenschaften und einer guten Verschweißbarkeit. Die Polyolefinfolie schützt das Packgut gegen schnelles Austrocknen bzw. gegen Verlust von Aromen bei sehr geringem Materialeinsatz.

Dem Bedürfnis des Verbrauchers nach einer hygienischen, optisch ansprechenden, fest verschlossenen und widerstandsfähigen Verpackung steht der Wunsch eines leichten und kontrollierbaren Öffnens entgegen. Letzteres wird von Verbrauchern bei den Verpackungen aus Polyolefinfolien zunehmend bemängelt und als Nachteil gegenüber Verpackungen aus Papier angesehen.

Uniaxial orientierte Folien, wie z.B. Bändchenware zeigen in Orientierungsrichtung eine ausgeprägt niedrige Einreißfestigkeit bzw. hohe Spleißneigung und lassen sich daher in diese Richtung problemlos kontrolliert ein- und weiterreißen. Uniaxial orientierte Folien sind jedoch für viele Gebiete nicht einsetzbar, unter anderem auf Grund mangelhafter mechanischer Festigkeiten in Querrichtung. Der Prozeß der biaxialen Orientierung erzeugt einerseits die wünschenswerten hohe Festigkeiten (Moduli) in beiden Dimensionen; auf der anderen Seite werden dadurch aber auch prozessbedingt die Vorzugsrichtungen partiell egalisiert. Dies hat zur Folge, dass zum Öffnen einer Folienverpackung (z. B. Keksbeutel) zunächst eine hohe Kraft überwunden werden muss, um die Folie einzureissen. Ist die Folie jedoch einmal verletzt bzw. angerissen, so pflanzt sich ein Riss schon bei Anwendung sehr niedriger Zugkräfte unkontrollierbar fort. Diese mangelhaften Gebrauchseigenschaften einer zu hohen Einreissfestigkeit und eines unkontrollierbaren Weiterreissverhaltens vermindern trotz der eingangs erwähnten Vorteile die Akzeptanz von Folienverpackungen als Papierersatz am Endverbrauchermarkt.

Ein Lösungsversuch dieses Problems setzt bei der Siegelnaht der Folienverpackungen an. So beschreibt beispielsweise die EP 0 781 652 eine Folie, welche anstelle einer Siegeischicht eine peelbare Schicht und zusätzlich einen speziellen Schichtaufbau aufweist. Dadurch wird es möglich, die Folienverpackung kontrolliert dort wieder zu öffnen, wo sie ursprünglich verschlossen wurde, nämlich in der Naht. Durch diese vorgesehene Sollbruchstelle soll verhindert werden, dass sich Risse beim Offnen unkontrolliert in der Folie fortsetzen.

Eine weitere Lösung, die vorgeschlagen wurde, ist ein mehrschichtiger Schichtaufbau mit einer Sollbruchstelle, d. h. mit einer Schicht, die eine besonders geringe mechanischen Festigkeit aufweist. Beim Öffnen reisst die Folie in dieser Sollbruchstelle ein. Der Riss pflanzt sich nur in der schwachen Schicht fort. Dieses Prinzip wird sowohl bei coextrudierten Folien als auch bei mehrschichtigen Laminaten realisiert.

Eine weitere, bekannte, mögliche Lösung ist der nachträglichen Einbau einer mechanischen Sollbruchstelle in Form einer Perforation oder Einkerbung.

In manchen Fällen bedient man sich eines Aufreissbandes (meist Polyester), um ein kontrolliertes Öffnen der Verpackung zu ermöglichen. Diese Lösung ist sehr teuer und hat sich deshalb im Markt nicht durchgesetzt.

Die JP 10 147676 beschreibt eine Harzzusammensetzung aus Polystyrol und Aluminiumborat order Siliciumcarbidfasern. Diese Fasern werden zur Verbesserung der mechanischen Festigkeit zugesetzt. Aus der Harzzusammensetzung können Formteile, auch biaxial orientierte Sheets hergestellt werden. Die Schrift beinhaltet keine Offenbarung über das Reißverhalten dieser Harzzusammensetzung.

US 3,903,234 beschreibt ein Verfahren zur Herstellung einer Folie aus monoolefinischem Polymer und Füllstoffen. Die Folie hat auf Grund der Vakuolenstruktur eine faserartig aufgerissene Oberfläche. Der Zusatz von Fasern selbst ist nicht erwähnt.

Die Aufgabe der vorliegenden Erfindung bestand nun darin, ein synthetisches Papier zur Verfügung zu stellen, das die Vorteile einer biaxial orientierten Kunststoffolie mit papierähnlichem Einreiß- und Weiterreißverhalten verbindet. Keine zusätzlichen Maßnahmen wie Aufreißband oder Einkerbung oder komplizierter Schichtaufbau soll nötig sein.

Die der Erfindung zugrundeliegende Aufgabe wird gelöst durch eine biaxial orientierte Polymerfolie mit mindestens einer Schicht, wobei diese Schicht eine faserhaltige Schicht ist, die aus einem thermoplastischen Polymer aufgebaut ist, und Naturfasern, Polymerfasern oder Mineralfasern enthält.

Ausgenommen sind mineralische Fasern aus Asbest oder Glasfasern, insbesondere Langglasfasern. Erstere verbieten sich wegen ihres Gefärdungspotentials (Cancerogenität, Lungengängigkeit) für Mitarbeiter von Folienhersiellem und Verarbeitem, letztere sind wegen ihrer hohen Abrasivität und der damit verbundenen Abnutzung von Maschinenteilen nachteilig.

Die papierähnliche Folie kann je nach vorgesehenem Verwendungszweck als transluzente bis transparente oder als opake Folie ausgeführt werden. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Mindestens eine Schicht der erfindungsgemäßen Folien enthält mineralische Fasern wie Wollastonit oder Polymer- oder Naturfasern. Diese faserhaltige Schicht der Folie, welche zum papierähnlichen Reißverhalten beiträgt, ist aus thermoplastischen Polymeren aufgebaut.

Mögliche thermoplastische Polymere für die Polymermatrix der faserhaltigen Schicht sind Polyimide, Polyamide, Polyester, PVC oder Polyolefine aus olefinischen Monomeren mit 2 bis 8 C-Atomen. Besonders geeignet sind Polyamide und Polyolefine, worunter Propylenpolymere, Ethylenpolymere, Butylenpolymere, Cycloolefinpolymere oder Mischpolymerisate aus Propylen-, Ethylen-, Butylen- Einheiten oder Cycloolefinen bevorzugt sind. Im allgemeinen enthält die faserhaltige Schicht mindestens 50 Gew.%, vorzugsweise 70 bis 99 Gew.%, insbesondere 90 bis 98 Gew.-%, des thermoplastischen Polymers, jeweils bezogen auf das Gewicht der Schicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.%, Propylen und besitzt einen Schmelzpunkt von 120 °C oder höher, vorzugsweise 130 bis 170°C, und im allgemeinen einen Schmelzflußindex von 0,5 g/10 min bis 15g/10min, vorzugsweise 2 g/10 min bis 10 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit C₄-C₈-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kemschicht dar. wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Die faserhaltige Schicht der Folie enthält neben dem thermoplastischen Polymer Fasern in einer Menge von maximal 50 Gew.-%, vorzugsweise 0,5 bis 10 Gew.-%, insbesondere 1 bis 5 Gew.-%, bezogen auf das Gewicht der faserhaltigen Schicht.

Grundsätzlich kommen verschiedene Materialien für die Fasern in Frage. Geeignet sind Fasern aus thermoplastischen Polymeren, aus vemetzten thermoplastischen Polymeren, amorphe Polymere, semikristalline Polymere, stabilisierte Naturfasern, kristalline Mineralfasern.

Fasern aus thermoplastischen Polymeren wie Polyolefine, Polyethylene, Polypropylene, Cycloolefinpolymere, Mischpolymerisate, Polyester, Polyamide, Polyimide, Polyaramide sind geeignet. Ebenso sind Fasern aus vemetzten thermoplatischen Polymeren, strahlenvernetzte oder chemisch vemetzte thermoplastische Polymere mit entsprechend reaktiven Gruppen verwendbar. Auch stabilisierte Naturfasern wie Baumwollfasern oder Cellulosefasern oder kristalline Mineralfasern, wie beispielsweise Wollastonit bzw. Calciumsilikate, z.B Tremin 939 der Fa. Quarzwerke GmbH/Frechen BRD und andere Mineralien mit entsprechender Morphologie konnen eingesetzt werden. Im Sinne der vorliegenden Erfindung umfaßt der Begriff "Mineralfaser" keine Glasfasern. Im Rahmen der Untersuchungen zur vorliegenden Erfindung wurde gefunden, daß Glasfasern für biaxial orientierte Folien ungeeignet sind. Unter anderem treten bei der Verwendung von mit Glasfasern gefüllten thermoplastische Polymere schwere Schäden an Düsen und Walzen der boPP-Anlage auf.

Die Faserdimensionen, insbesondere Längen und Durchmesser richten sich nach dem konkreten Anwendungsgebiet der Folie sowie auch nach der Foliendicke. Zweckmäßigerweise liegen die Medianwerte von Faserdurchmesser im Bereich 1.5 bis 50 µm, vorzugsweise 3 bis 20 µm und die Faserlänge im Bereich von 10 bis 200 µm, vorzugsweise 20 bis 50 µm und das Faser UD Verhältnis im Bereich 5 bis 50, vorzugsweise 10 bis 30.

In einer weiteren Ausführungsform können die Fasern mit einer geeigneten Beschichtung versehen werden. Insbesondere sind Beschichtungen bevorzugt, die die Rheolgie und die Verträglichkeit der Fasern mit der Polymermatrix verbessern. Die Beschichtung kann gegebenenfalls Stabilisator enthalten, insbesondere bei Polymorfasern. Bevorzugt sind organische Coatungen zur Steuerung der Verträglichkeit mit der Polymermatrix.

Unter den Fasern aus thermoplastischen Polymeren sind für besondere Ausführungsformen mattierte Fasern bevorzugt. Diese enthalten zur Minderung des natürlichen Glanzes der Polymerfasern Mattierungsmittel, vorzugsweise Titandioxid, welches bei der Faserherstellung der Spinnmasse zugesetzt wird. Auf diese Weise erhält man mit TiO₂ pigmentierte Fasern, deren Einsatz in der faserhaltigen Schicht der erfindungsgemäßen Folie besonders bevorzugt ist Diese Ausführungsformen zeichnen sich durch einen erhöhten Weißgrad und eine besonders papierähnliche Optik aus.

Die Fasern müssen gegenüber dem Verarbeitungsprozeß, d.h. bei der Extrusion und der nachfolgenden Orientierung weitgehend stabil sein. Insbesondere muß die Faserstruktur bei der Herstellung der Folie im wesentlichen erhalten bleiben. Hierfür sollte das Material, insbesondere bei Fasern aus thermoplastischen Polymeren, einen ausreichend hohen Schmelz- bzw. Erweichungspunkt haben, so daß die Faser bei der Verarbeitungstemperatur des jeweiligen Matrixpolymeren ihre Form behält bzw. nicht aufschmilzt. Der Schmelzpunkt der Fasern liegt vorzugsweise mindestens 5°C über der Extrusionstemperatur des Matrixpolymeren.

Überraschenderweise bewirken die Fasern in der biaxial orientierten Folie eine Veränderung des Reißverhaltens. Das Reißverhalten der Folie wird dem Reißverhalten von Papier wesentlich ähnlicher. Dieser Effekt überrascht insbesondere vor dem Hintergrund des Fachwissens Ober faserverstärkte Kunststoffe. Es ist bekannt, im Bereich des Spritzgußes Extrudate aus thermoplastischen Kunststoffen mit Fasern zu versetzen, um die sogenannten faserverstärkten Kunststoffe herzustellen. Hierbei werden die mechanischen Eigenschaften der Extrudate verbessert, wodurch die Teile vor allem dort eingesetzt werden können, wo besonders hohe mechanische Belastungen auftreten. Bei Übertragung dieser Kenntnisse auf die biaxial orientierte Folie war eine Erhöhung der mechanischen Festigkeit zu erwarten. Eine derartige Verfestigung oder Versteifung der Folie wurde jedoch nicht festgestellt. Im Gegensatz hierzu wurde eine leichtere Einreißbarkeit beobachtet, d.h. eine geringere, mechanischen Festigkeit festgestellt

Dieser Effekt ist besonders ausgeprägt, wenn die Fasern in einer Zwischenschicht oder in der Basisschicht der Folie eingesetzt werden. Fasern in einer dünnen Deckschicht aus siegelbaren Polymeren sind weniger vorteilhaft. Zum einen wird die Einreißkraft nur unwesentlich reduziert Zum anderen können die Fasern als Additive der Deckschichten die Siegeleigenschaften sowie die Bedruckbarkeit der Folie negativ beeinflussen.

Zusätzlich wurde überraschenderweise festgestellt, daß die Textur der Potienoberftächen und - damit verknüpft - das optische Erscheinungsbild sowie Haptik der Folie papierähnlicher wird. Das papierähnliche Eigenschaftsbild zeigt sich auch in dem Klangeindruck, der beim Einreißen entsteht. Darüber hinaus zeigen besondere Ausführungsformen eine erhöhten Wasserdampfdurchlässigkeit (Atmungsaktivität).

Gegebenenfalls kann die faserhaltige Schicht zusätzlich Pigmente und/oder vakuoleninizierende Teilchen in jeweils üblichen Mengen enthalten.

Pigmente sind im Sinne der vorliegenden Erfindung unverträgliche Teilchen, die im wesentlichen nicht zur Vakuolenbildung beim Verstrecken der Folie führen und im allgemeinen einen mittleren Teilchendurchmesser im Bereich von 0,01 bis maximal 1 µm, vorzugsweise 0,01 bis 0,7 µm, insbesondere 0,01 bis 0,4 µm haben. Die Schicht enthält Pigmente im allgemeinen in einer Menge von 1 bis 15 Gew.-%, vorzugsweise von 2 bis 10 Gew.%, jeweils bezogen auf das Gewicht der Schicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Gegebenfalls kann die Schicht zusätzlich vakuoleninizüerende Füllstoffe enthalten, im allgemeinen in einer Menge von 1-15 Gew.-%, vorzugsweise 2-10 Gew.-%, insbesondere 1-5 Gew.-%.

Im Sinne der vorliegenden Erfindung sind "vakuoleninizüerende Füllstoffe" feste Teilchen, die mit der Polymermatrix unverträglich sind und beim Verstrecken der Folien zur Bildung von vakuolenartigen Hohlräumen führen, wobei Größe, Art und Anzahl der Vakuolen von der Größe der festen Teilchen und den Streckbedingungen wie Streckverhältnis und Strecktemperatur abhängig sind. Die Vakuolen reduzieren die Dichte, geben den Folien ein charakteristisches perlmuttartiges, opakes Aussehen, welches durch Lichtstreuung an den Grenzflächen "Vakuole/Polymermatrix" entsteht In der Regel haben die vakuoleniniziierenden Füllstoffe eine Mindestgröße von 1 µm. Im allgemeinen beträgt der mittlere Teilchendurchmesser der Teilchen 1 bis 6 µm, vorzugsweise 1,5 bis µm.

Die faserhaltige Schicht der erfindungsgemäßen Folie kann die einzige Schicht einer einschichtigen Ausführungsform der papierähnlichen Kunststoffolie sein, Die faserhaltige Schicht kann auch die Basisschicht einer mehrschichtigen Ausführungsform der Folie bilden. Vorzugsweise ist die faserhaltige Schicht eine Zwischenschicht, die auf der Basisschicht aufgebracht ist. Entsprechend weisen mehrschichtige Ausführungsformen der papierähnlichen Folie neben der faserhaltigen Schicht zusätzlich eine Basisschicht, oder eine Zwischenschicht oder eine Deckschicht auf. Gegebenenfalls kann die Basisschicht und/oder die zwischenschicht Pigmente und/oder vakuoleninitierende Füllstoffe enthalten.

Diese zusätzlichen Schichten, welche im allgemeinen faserfrei sind, sind im allgemeinen aus thermoplastischen Polymeren aufgebaut. Sie enthalten mindestens 70 Gew.-%, vorzugsweise 75 bis 100 Gew.-%, insbesondere 90 bis 98 Gew.-%, eines thermoplastischen Polymers. Als thermoplastische Polymere für diese zusätzlichen Schichten sind grundsätzlich die gleichen Polymeren geeignet wie sie vorstehend für die faserhaltige Schicht beschrieben sind.

Für die Deckschichten sind
Copolymer von
Ethylen und Propylen oder
Ethylen und Butylen oder
Propylen und Butylen oder
Ethylen und einem anderen Olefin mit 5 bis 10 Kohlenstoffatomen oder
Propylen und einem anderen Olefin mit 5 bis 10 Kohlenstoffätamen oder
ein Terpolymer von
Ethylen und Propylen und Butylen oder
Ethylen und Propylen und einem anderen Olefin mit 5 bis 10 Kohlenstoffatomen oder
eine Mischungen oder Blends aus zwei oder mehreren der genannten Homo-, Co- und Terpolymeren geeignet.

Hierunter sind
statistische Ethylen-Propylen-Copolymere mit
einem Ethylengehalt von 2 bis 10 Gew.-%, bevorzugt 5 bis 8 Gew.-%, oder
statistische Propylen-Butylen-1-Copolymere mit
einem Butylengehalt von 4 bis 25 Gew.-%, bevorzugt 10 bis 20 Gew.-%,
jeweils bezogen auf das Gesamtgewicht des Copolymeren, oder
statistische Ethylen-Propylen-Butylen-1 Terpolymere mit
einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%,
jeweils bezogen auf das Gesamtgewicht des Terpolymeren, oder
ein Blend aus einem Ethylen-Propylen-Butylen-1-Terpolymeren und einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,
besonders bevorzugt.

Die vorstehend beschriebenen Co- oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Schichten aus Co- und/oder Terpolymeren bilden vorzugsweise die Deckschichten von siegelfähigen Ausführungsformen der Folie.

Die Gesamtdicke der Folie kann innerhalb weiter Grenzen variieren und richtet sich nach dem beabsichtigten Verwendungszweck. Die bevorzugten Ausführungsformen der erfindungsgemäßen papierähnlichen Folie haben Gesamtdicken von 5 bis 250µm, wobei 10 bis 100µm, insbesondere 20 bis 60µm, bevorzugt sind.

Die Dicke der faserhaltigen Schicht wird unabhängig von anderen Schichten gewählt und liegt bevorzugt im Bereich von 1 bis 250 µm, insbesondere 3 bis 50 µm.

Die scheinbare Dichte der Folie liegt im Bereich von 0,3 bis 1,5 g/cm³ (Meßmethode nach DIN)

Die Basisschicht ist im Sinne der vorliegenden Erfindung diejenige Schicht, welche mehr als 50 % der Gesamtdicke der Folie ausmacht. Ihre Dicke ergibt sich aus der Differenz von Gesamtdicke und der Dicke der aufgebrachten Deck- und Zwischenschicht/en und kann daher analog der Gesamtdicke innerhalb weiter Grenzen variieren. Deckschichten bilden die äußerste Schicht der Folie.

Um bestimmte Eigenschaften der erfindungsgemäßen Polypropylenfolie noch weiter zu verbessern, können sowohl die Basisschicht als auch die Zwischenschicht/en und die Deckschicht/en Zusätze in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Kernschicht und der Deckschicht/en verträglich sind, mit Ausnahme der in der Regel unverträglichen Antiblockmittel.

Die Erfindung betrifft weiterhin ein Verfahren zur Herstellung der erfindungsgemäßen Mehrschichtfolie nach dem an sich bekannten Extrusionsverfahren. Die Bedingungen währends des Herstellprozeßes richten sich nach der jeweiligen Polymermatrix, welche den Hauptbestandteil der Folie bildet. Nachfolgend wird als Beispiel der Herstellungsprozeß für eine Polypropylenfolie im Detail beschrieben.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt und thermofixiert und gegebenenfalls an der zur Oberflächenbehandlung vorgesehenen Oberflächenschicht entsprechend oberflächenbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die Fasern und die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte ein- oder mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 3:1 bis 7:1 und in Querrichtung vorzugsweise 5:1 bis 12:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Grundsätzlich kann zur biaxialen Verstreckung auch simultan in Längs-Querrichtung verstreckt werden. Diese Simultanstreckverfahren sind an sich im Stand der Technik bekannt.

An die biaxiale Streckung der Folie schließt sich ihre Thermofixierung (Wärmebehandlung) an, wobei die Folie etwa 0,5 bis 10 s lang bei einer Temperatur von 110 bis 150 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140 °C, vorzugsweise im Bereich von 125 bis 135 °C, und die Querstreckung bei einer Temperatur größer 140 °C, vorzugsweise bei 145 bis 160°C, durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Gegebenenfalls kann die Folie in nachfolgenden Verarbeitungsschritten durch geeignete Beschichtungsprozeße beschichtet, schmelzebeschichtet, lackiert oder kaschiert werden, um der Folie weitere vorteilhafte Eigenschaften zu verleihen.

Die erfindungsgemäße Kunststoffolie zeichnet sich durch eine leichtere Einreißbarkeit aus. Die Kraft, die zur Initierung eines Einrisses an der Folienkante angewendet werden muß, ist deutlich reduziert Es kommt beim Einreißen nicht zu unerwünschten Verdehnungen an der Kante, dadurch daß die Folie dem Einreißen standhält. Die Folie läßt sich wesentlicher leichter einreißen und dann kontrollierter weiterreißen. Darüber hinaus zeigt sie auch in Bezug auf Aussehen, Haptik und Wasserdampfdurchlässigkeit papierähnlichen Charakter. Die erfingdungsgemäße Folie kann als Etikettenfolie, als Kaschierfolie oder als metallisierbare Folie verwendet werden.

Zur Charakterisierung der Fasern und der Folien wurden die folgenden Meßmethoden benutzt:

### Für die Charakterisierung der Medianwerte von Faserlänge /-durchmesser und L/D-Verhältnis wurde die folgende Methode verwendet:

Ein ausreichend dünner Abstrich des zu untersuchenden Fasermaterials wird unter einem Mikroskop betrachtet. Die Vergrößerung ist geeignet zu wählen, so daß ein repräsentatives Ensemble untersucht werden kann. Mit Hilfe geeigneter Softwrareunterstützung lassen sich einzelne Fasern hinsichtlich ihrer Länge, ihres Durchmessers und damit auch ihres L/D-Verhältnisses ausmessen. Durch Definition geeigneter Subensembles lassen sich diskretisierte Verteilungen von Faserlange und durchmesser erstellen, die eine Auswertung der Medianwerte ermöglicht.

### Flächengewicht

Das Flächengewicht wird in Anlehnung an DIN EN ISO 536 bestimmt.

### E-Modul:

Die E-Moduli in Längs- und Querrichtung werden nach DIN EN ISO 527-1 und 527-3 bestimmt.

### Weiterreißfestigkeit:

Die Weiterreißfestigkeit in Längs- und Querrichtung wird nach ASTM D1938-85 bestimmt.

### Einreißbarkeit:

Die Einreißbarkeit in Längsrichtung wird nach ASTM D1004-66 bestimmt.

### Dynamischer Reibungskoeffizient i/a

Der Reibungskoeffizient im Grenzfall des Gleitens der Folieninnenseite (i) gegen ihre Aussenseite (o) wurde in Anlehnung an DIN 53375 bestimmt.

### Wasserdampfdurchlässigkeit

Die Wasserdampfdurchlässigkeit wurde gemäß DIN 53122 Teil2 bei 37.8°C und 90% r.F. bestimmt.

Nachstehend sind alle eingesetzten Fasertypen mit ihren charakteristischen Eigenschaften aufgeführt.

**Tabelle (Fasercharakterisierung)**

| Fasertyp | Art | Gew. Mittl. Länge [µm] | Gew. Mittl. Durchmesser [µm] | UD-Verhältnis |
|---|---|---|---|---|
| A | Cellulose | 197 | 20 | 10 |
| B | Cellulose | 18 | 15 | 1 |
| C | Baumwolle | 390 | 16 | 23 |
| D | Baumwolle | 510 | 17 | 29 |
| E | Polyamid 6,6 | 620 | 20 | 30 |
| F | Wollastonit | 66 | 8 | 8 |
| G | Wollastonit | 50 | 7 | 7 |

Die Erfindung wird nunmehr durch die nachfolgenden Beispiele erläutert.

### Beispiel 1: Fasern in den Zwischenschichten einer Fünfschichtfolie mit transparenter Basisschicht

Es wurde eine transparente Fünfschichtfolie über die entsprechenden Verfahrensschritte hergestellt, dh. nach der Coextrusion wurde über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 250°C |
| Längsstreckung: | Streckwalze T = 120°C |
| Längsstreckung um den | Faktor 4,5 |
| Querstreckung: | Aufheizfelder T = 170°C |
| | Streckfelder T = 165°C |
| Querstreckung um den | Faktor 8 |
| Fixierung: | Temperatur T = 155°C |
| Coronabehandlung: | Spannung: 10 000 V |
| | Frequenz: 10 000 Hz |

Die Basisschicht der Folie enthielt im wesentlichen ein Propylenhomopolymer. In den Zwischenschichten wurden entweder Propylenhomopolymer oder ein Propylen-Ethylen-Copolymer eingesetzt. Die Zwischenschichten enthielten verschiedene Fasern in einer Menge von bis zu 30 Gew -%. Als Deckschichtmaterial wurde auf beiden Seiten ein siegelbares Copolymer eingesetzt. Alle Schichten enthielten übliche Stabilisatoren und Neutralisationsmittel.

Die so hergestellte Mehrschichtfolie wies direkt nach der Herstellung eine Oberflächenspannung von 40 bis 41 mN/m auf (D-Seite). Die Folien waren ca. 35 - 43 µm dick. Die Dicke der Deckschichten betrug jeweils ca. 0,7 µm; die Dicke beider Zwischenschichten betrug jeweils ca. 3 µm. Mit allen verwendeten Fasertypen zeigten die Folien ein papierähnliches Aussehen. Die Einreißbarkeit war signifikant erniedrigt. Die Folien klangen beim Ein- und Weiterreißen ähnlich wie Papier. Ihr Reibungskoeffizient war erniedrigt.

### Vergleichsbeispiel 1

Im Vergleich zu Beispiel 1 wurde eine Folien mit dem gleichen Schichtaufbau wie in Beispiel beschrieben hergestellt. Der einzige Unterschied bestand darin, daß den Zwischenschichten keine Fasern zugesetzt wurden.

**Tabelle 1**

| Folieneigenschaften der Folien gemäß Beispiel 1 und Vergleichsbeispiel 1 | | | | | |
|---|---|---|---|---|---|
| verwendeter Fasertyp | D | C | B | A | Vergleichsbeispiel |
| Faserkonzentration [%] | 2,5 | 2,5 | 2,5 | 2,5 | Ohne Fasern |
| Flächengewicht [g/m²] | 27,6 | 27,9 | 33,2 | 30,5 | 34,3 |
| E-Modul, längs [N/mm²] | 1700 | 1700 | 1900 | 1700 | 1900 |
| E-Modul, quer [N/mm²] | 4600 | 4900 | 5000 | 4600 | 5400 |
| Einreißfestigkeit [N] | 6,9 | 7,2 | 8,0 | 7,9 | 9,6 |
| Weiterreißfestigkeit, längs [mN] | 96 | 124 | 156 | 144 | 164 |
| Weiterreißfestigkeit, quer [mN] | 44 | 32 | 44 | 80 | 60 |
| Dynamischer Reibungskoeff. i/o | 0.35 | 0.4 | 0.35 | 0.3 | 0.5 |

### Beispiel 2: Fasern in der Kernschicht einer transparenten Fünfschichtfolie

Es wurde eine Folie wie in Beispiel 1 beschrieben hergestellt. Im Unterschied zu Beispiel 1 wurden jetzt die Fasern in die Basisschicht der Folie eingearbeitet. Die Zwischenschichten blieben faserfrei. Die extrudierte, transparente Fünfschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewahlt wurden:

| | |
|---|---|
| Extrusion: | Extrusionstemperatur 250°C |
| Längsstreckung: | Streckwalze T = 114°C |
| Längsstreckung um den | Faktor 4,5 |
| Querstreckung: | Aufheizfelder T = 172°C |
| | Streckfelder T = 160°C |
| Querstreckung um den | Faktor 8 |
| Fixierung: | Temperatur T = 150°C |
| Coronabehandlung: | Spannung: 10 000 V |
| | Frequenz: 10 000 Hz |

Die so hergestellte Mehrschichtfolie wies direkt nach der Herstellung eine Oberflächenspannung von 40 bis 41 mN/m auf (D-Seite). Die Folien waren ca. 38 - 42 µm dick Die Dicke der Deckschichten betrug jeweils ca. 0,7 µm; die Dicke beider Zwischenschichten betrug jeweils ca. 3 µm. Unabhängig vom verwendeten Fasertyp zeigen die Folien des Beispiels 2 ein papierähnliches Aussehen. Die Einreißbarkeit ist signifikant erniedrigt. Die Folie klingt beim Ein- und Weiterreißen ähnlich wie Papier. Ihr Reibungskoeffizient ist erniedrigt

### Vergleichsbeispiel 2

Es wurde eine Folie wie Beispiel 2 beschrieben hergestellt. Im Unterschied zu Beispiel 2 enthielt die Folie keine Fasern in der Basisschicht.

**Tabelle 2**

| Folieneigenschaften von Beispiel 2 und Vergleichsbeispiel 2 | | | |
|---|---|---|---|
| verwendeter Fasertyp | F | F | Vergleichsbeispiel |
| Faserkonzentration [%] | 7,5 | 5,0 | Ohne Fasern |
| | | | |
| Flächengewicht [g/m²] | 38,1 | 36,4 | 34,6 |
| E-Modul. längs [N/mm²] | 1700 | 1800 | 2000 |
| E-Modul, quer [N/mm² | 2800 | 3000 | 3500 |
| Einreißfestigke/längs [N] | 7,7 | 8,1 | 9,4 |
| Weiterreißfestigkeit, längs [mM] | 88 | 128 | 124 |
| Weiterreißfestigkeit, quer [mN] | 40 | 28 | 60 |
| Dyn. Reibungskoeff. I/o | 0.30 | 0.32 | 0.45 |

### Beispiel 3: Fasern in den Zwischenschichten einer Fünfschichtfolie mit opaker Kemschicht

Es wurde eine Folie wie Beispiel 1 beschrieben hergestellt. Im Unterschied zu Beispiel 1 enthielt die Basisschicht zusätzlich Calciumcarbonat und Titandioxid.

Die extrudierte, opake Fünfschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 240°C |
| Längsstreckung: | Streckwalze T = 114°C |
| Längsstreckung um den | Faktor 4,5 |
| Querstreckung: | Aufheizfelder T = 172°C |
| | Streckfelder T = 160°C |
| Querstreckung um den | Faktor 8 |
| Fixierung: | Temperatur T = 150°C |
| Coronabehandlung: | Spannung: 10 000 V |
| | Frequenz: 10 000 Hz |

Die so hergestellte Mehrschichtfolie wies direkt nach der Herstellung eine Oberflächenspannung von 40 bis 41 mN/m auf (D-Seite). Die Folien waren ca. 32 - 44 µm dick. Die Dicke der Deckschichten betrug jeweils ca. 0,7 µm; die Dicke beider Zwischenschichten betrug jeweils ca. 3 µm. Unabhängig vom verwendeten Fasertyp zeigen die Folien des Beispiels ein ähnliches Aussehen. Die Einreißbarkeit ist signifikant erniedrigt. Die Folie klingt beim Ein- und Weiterreißen ähnlich wie Papier. Ihr Reibungskoeffizient ist erniedrigt. Die Folie mit erhöhter Faserkonzentration in ZWS (Typ F; 15%) zeigt eine signifikant erhöhte WDD (ca. 50%).

### Vergleichsbeispiel 3

Es wurde eine Folie wie Beispiel 3 beschrieben hergestellt. Im Unterschied zu Beispiel 3 enthielten die Zwischenschichten keine Fasern.

**Tabelle 3 (Folieneigenschaften)**

| | | | | | |
|---|---|---|---|---|---|
| verwendeter Fasertyp | F | D | C | B | Vergleichsbeispiel |
| Faserkonzentration [%] | 15,0 | 2,5 | 2,5 | 2,5 | Ohne Fasern |
| | | | | | |
| Flächengewicht [g/m²] | 29,7 | 20,4 | 26,4 | 26,3 | 30,8 |
| E-Modul, längs [N/mm²] | 1500 | 1100 | 1200 | 1300 | 1600 |
| E-Modul, quer [N/mm² | 2400 | 2200 | 2300 | 2300 | 2900 |
| Einreißfestigkeit [N] | 5,2 | 6,8 | 6,4 | 6,7 | 8,5 |
| Weiterreißfestigkeit, längs [mN] | 82 | 56 | 84 | 68 | 94 |
| Weiterreißfestigkeit, quer [mN] | 63 | 52 | 36 | 40 | 55 |
| Dyn. Reibungskoeff. i/o | 0,25 | 0.35 | 0.3 | 0.4 | 0.55 |
| WDD (37,8°C u. 90% r.F.) | 7,8 | - | - | - | 6,8 |

### Beispiel 4: Fasern in der Kernschicht einer Fünfschichtfölie mit opaker Kernschicht

Es wurde eine Folie wie in Beispiel 2 beschrieben hergestellt. Im Unterschied zu Beispiel 2 enthielt die Folie jetzt zusätzlich in ihrer Basisschicht Calciumcarbonat und Titandioxid.

Die extrudierte, opake Fünfschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 245°C |
| Längsstreckung: | Streckwalze T = 114°C |
| Längsstreckung um den | Faktor 4,5 |
| Querstreckung: | Aufheizfelder T = 170°C |
| | Streckfelder T = 160°C |
| Querstreckung um den | Faktor 8 |
| Fixierung: | Temperatur T = 150°C |
| Coronabehandlung: | Spannung: 10 000 V |
| | Frequenz: 10 000 Hz |

Die so hergestellte Mehrschichtfolie wies direkt nach der Herstellung eine Oberflächenspannung von 40 bis 41 mN/m auf (D-Seite). Die Folien waren ca. 40 - 52 µm dick. Die Dicke der Deckschichten betrug jeweils ca. 0,7 µm; die Dicke beider Zwischenschichten betrug jeweils ca. 3 µm. Unabhängig vom verwendeten Fasertyp zeigen die Folien des Beispiels ein ähnliches Aussehen. Die Einreißbarkeit ist signifikant erniedrigt. Die Folie klingt beim Ein- und Weiterreißen ähnlich wie Papier.

### Vergleichbeispiel 4

Es wurde eine Folie wie in Beispiel 4 beschrieben hergestellt. Im Unterschied zu Beispiel 4 enthielt die Basisschicht jetzt keine Fasern.

**Tabelle 4 (Folieneigenschaften)**

| | | |
|---|---|---|
| verwendeter Fasertyp | E | Vergleichsbeispiel |
| Faserkonzentration [%] | 1,5 | Ohne Fasern |
| | | |
| Flächengewicht [g/m²] | 30,4 | 31,1 |
| E-Modul, längs [N/mm²] | 1156 | 1700 |
| E-Modul, quer [N/mm² | 2600 | 3000 |
| Einreißfestigkeit [N] | 7,7 | 8,6 |
| Weiterreißfestigkeit, längs [mN] | 92 | 76 |
| Weiterreißfestigkeit, quer [mN] | 68 | 52 |

### Beispiel 5: Fasern in Kemschicht und Zwischenschichten einer Fünfschichtfolie mit opaker Kemschicht

Es wurde eine Folie wie in Beispiel 4 beschrieben hergestellt Im Unterschied zu Beispiel 4 enthielt die Folie zusätzlich in der Zwischenschicht Fasern in einer Menge von bis zu 30 Gew.-%, d.h. in diesem Beispiel waren sowohl die Basis- als auch die Zwischenschicht faserhaltig.

Die extrudierte, opake Fünfschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 245°C |
| Längsstreckung: | Streckwalze T =114°C |
| Längsstreckung um den | Faktor 4,5 |
| Querstreckung: | Aufheizfelder T = 170°C |
| | Streckfelder T = 160°C |
| Querstreckung um den | Faktor 8 |
| Fixierung: | Temperatur T = 150°C |
| Coronabehandlung: | Spannung: 10 000 V |
| | Frequenz: 10 000 Hz |

Die so hergestellte Mehrschichtfolie wies direkt nach der Herstellung eine Oberflächenspannung von 40 bis 41 mN/m auf (D-Seite). Die Folien waren ca. 40 - 48 µm dick. Die Dicke der Deckschichten betrug jeweils ca. 0,7 µm; die Dicke beider . Zwischenschichten betrug jeweils ca. 3 µm. Unabhängig vom verwendeten Fasertyp zeigen die Folien des Beispiels ein ähnliches Aussehen. Die Einreißbarkeit ist signifikant erniedrigt. Die Folie klingt beim Ein- und Weiterreißen ähnlich wie Papier. Ihr Reibungskoeffizient ist erniedrigt.

**Tabelle 5 (Folieneigenschaften)**

| | | | | | |
|---|---|---|---|---|---|
| verwendeter Fasertyp | F | F | G | G | Vergleichsbeispiel |
| Faserkonzentration [%] in ZWS | 7,5 | 7,5 | 7,5 | 7,5 | Ohne Fasern |
| Faserkonzentration [%] in | 5,0 | 2,5 | 5,0 | 2,5 | |
| Kemschicht | | | | | |
| | | | | | |
| Flächengewicht [g/m²] | 28,8 | 29,0 | 32,9 | 31,6 | 29,4 |
| E-Modul, längs [N/mm²] | 1100 | 1300 | 1200 | 1400 | 1500 |
| E-Modul, quer N/mm² | 1600 | 2000 | 1700 | 2100 | 2600 |
| Einreißfestigkeit [N] | 6,3 | 6,7 | 5,9 | 7,0 | 8,5 |
| Weiterreißfestigkeis; längs [mN] | 124 | 116 | 124 | 112 | 100 |
| Weiterreißfestigkeit, quer [mN] | 232 | 156 | 60 | 64 | 58 |
| WDD (37,8°Cu. 90%r.F.) | 7,3 | 7,0 | 7,5 | 6,8 | 6,5 |

## Patentansprüche

1. Biaxial orientierte Polymerfolie mit mindestens einer Schicht, **dadurch gekennzeichnet, daß** diese Schicht eine faserhaltige Schicht ist, die aus einem thermoplastischen Polymer aufgebaut ist und Cellulosefasern, Baumwollefasern, Polypropylenfasern, Polyethylenfasern, Polyesterfasern, Polyamidfasem, Polyimidfasern, Wollastonitfasern oder Fasern aus Calciumsilikat enthält

2. Biaxial orientierte Polymerfolie mit mindestens einer Schicht, **dadurch gekennzeichnet, daß** diese Schicht eine faserhaltige Schicht ist, die aus einem thermoplastischen Polymer aufgebaut ist und Naturfasern, Polymerfasern oder Mineralfasern enthält, wobei die Mineralfaser keine Asbest- oder Glasfaser ist und wobei das thermoplastische Polymere ein Polyolefin ist.

3. Polymerfolie nach Anspruch 2, **dadurch gekennzeichnet, daß** das Polyolefin ein Polypropylen ist.

4. Polymerfolie nach einem der Ansprüche 1 bis 3, **dadurch gekennzeichnet, daß** die faserhaltige Schicht 0,5 - 30 Gew.-%, bezogen auf das Gewicht der Schicht, Fasern enthält.

5. Polymerfolie nach einem der Ansprüche 2 bis 4, **dadurch gekennzeichnet, daß** die Fasern Cellulosefasern, Baumwollefasern, Polypropylenfasern, Polyethylenfasern, Polyesterfasern, Polyamidfasern, Polyimidfasern, Wollastonitfasern oder Fasern aus Calciumsilikat sind.

6. Polymerfolie nach einem der Ansprüche 1 bis 5, **dadurch gekennzeichnet, daß** die Fasern eine Länge im Bereich von 10 bis 200µm und einen Durchmesser im Bereich von 1,5 bis 50µm und ein Länge/Durchmesser UD Verhältnis von 5 bis 30 haben.

7. Polymerfolie nach einem der Ansprüche 1 bis 6, **dadurch gekennzeichnet, daß** die Fasern einen Schmelzpunkt haben, der mindestens 5°C über der Extrusionstemperatur des Matrixpolymeren bzw. der Polymer-Fasermischung liegt.

8. Polymerfolie nach einem der Ansprüche 1 oder 4- 7 **dadurch gekennzeichnet, daß** das Polymere der faserhaltigen Schicht ein Polyimid, Polyamid, Polyester oder PVC ist.

9. Polymerfolie nach Anspruch 3, **dadurch gekennzeichnet, daß** das Polypropylen ein isotaktisches Propylenhomopolymer ist.

10. Polymerfolie nach einem der Ansprüche 1 bis 9, **dadurch gekennzeichnet, daß** die Folie mehrschichtig ist und die faserhaltige Schicht die Basisschicht und/oder die Zwischenschicht der Folie ist.

11. Polymerfolie nach einem oder mehreren der Ansprüche 1 bis 10, **dadurch gekennzeichnet, daß** die Basisschicht und/oder die Zwischenschicht Pigmente und/oder vakuoleninizierende Füllstoffe enthält.

12. Polymerfolie nach Anspruch 11, **dadurch gekennzeichnet, daß** die faserhaltige Schicht zusätzlich Pigmente und/oder vakuoleninitierende Füllstoffe enthält.

13. Verfahren zur Herstellung einer Polymerfolie nach den Ansprüchen 1 bis 12, **dadurch gekennzeichnet, daß** eine Mischung aus thermoplastischem Polymer und Fasern auf eine Abkühlwalze extrudiert wird, die so erhalten Vorfolie erwärmt und in Längsrichtung und Querrichtung verstreckt wird.

14. Verwendung einer Polymerfolie nach einem der Ansprüche 1 bis 12 als Verpackungsfolie

15. Verwendung einer Polymerfolie nach einem der Ansprüche 1 bis 12 als Etikettenfolie.

16. Verwendung einer Polymerfolie nach einem der Ansprüche 1 bis 12 als Kaschierfolie.

17. Verwendung einer Polymerfolie nach einem der Ansprüche 1 bis 12 als metallisierbare Folie.

## Claims

1. A biaxially oriented polymer film comprising at least one layer, **characterized in that** this layer is a fiber-containing layer which is built-up from a thermoplastic polymer and contains cellulose fibers, cotton fibers, polypropylene fibers, polyethylene fibers, polyester fibers, polyamide fibers, polyimide fibers, wollastonite fibers or fibers comprised of calcium silicate.

2. A biaxially oriented polymer film comprising at least one layer, **characterized in that** this layer is a fiber-containing layer which is built-up from a thermoplastic polymer and contains natural fibers, polymer fibers or mineral fibers, wherein the mineral fiber is not asbestos fiber or glass fiber and wherein the thermoplastic polymer is a polyolefin.

3. The polymer film according to claim 2, **characterized in that** the polyolefin is a polypropylene.

4. The polymer film according to one of claims 1 to 3, **characterized in that** the fiber-containing layer comprises 0.5 to 30 weight percent fibers, in relation to the weight of the layer.

5. The polymer film according to one of claims 2 to 4, **characterized in that** the fibers are cellulose fibers, cotton fibers, polypropylene fibers, polyethylene fibers, polyester fibers, polyamide fibers, polyimide fibers, wollastonite fibers or fibers comprised of calcium silicate.

6. The polymer film according to one of claims 1 to 5, **characterized in that** the fibers have a length in the range of 10 to 200 µm and a diameter in the range of 1.5 to 50 µm and a length/diameter L/D ratio of 5 to 30.

7. The polymer film according to one of claims 1 to 6, **characterized in that** the fibers have a melting point which is at least 5º C greater than the extrusion temperature of the matrix polymers or of the polymer-fiber mixture, respectively.

8. The polymer film according to one of claims 1 or 4 to 7, **characterized in that** the polymers of the fiber-containing layer is a polyimide, polyamide, polyester or PVC.

9. The polymer film according to claim 3, **characterized in that** the polypropylene is an isotactic propylene homopolymer.

10. The polymer film according to one of claims 1 to 9, **characterized in that** the film has a plurality of layers and the fiber-containing layer is the base layer and/or the interlayer of the film.

11. The polymer film according to one or more of claims 1 to 10, **characterized in that** the base layer and/or the interlayer contains pigments and/or vacuole-initiating fillers.

12. The polymer film according to claim 11, **characterized in that** the fiber-containing layer additionally contains pigments and/or vacuole-initiating fillers.

13. A method for producing a polymer film according to claims 1 to 12, **characterized in that** a mixture of thermoplastic polymer and fibers is extruded on a cooling roller, the pre-film obtained in this way is heated and stretched in longitudinal direction and transverse direction.

14. Use of a polymer film according to one of claims 1 to 12 as packaging film.

15. Use of a polymer film according to one of claims 1 to 12 as labeling film.

16. Use of a polymer film according to one of claims 1 to 12 as laminating film.

17. Use of a polymer film according to one of claims 1 to 12 as metallizable film.

## Revendications

1. Film polymère orienté de façon biaxiale avec au moins une couche, **caractérisé en ce que** ladite couche est une couche contenant des fibres, qui est constituée d'un polymère thermoplastique, et qui contient des fibres de cellulose, des fibres de coton, des fibres de polypropylène, des fibres de polyéthylène, des fibres de polyester, des fibres de polyamide, des fibres de polyimide, des fibres de Wollastonite ou des fibres de silicate de calcium.

2. Film polymère orienté de façon biaxiale avec au moins une couche, **caractérisé en ce que** ladite couche est une couche contenant des fibres qui est constituée d'un polymère thermoplastique et qui contient des fibres naturelles, des fibres de polymère ou des fibres minérales, la fibre minérale n'étant ni de l'amiante, ni de la fibre de verre et le polymère thermoplastique étant une polyoléfine.

3. Film polymère selon la revendication 2, **caractérisé en ce que** la polyoléfine est un polypropylène.

4. Film polymère selon l'une quelconque des revendications 1 à 3, **caractérisé en ce que** la couche contenant des fibres contient de 0,5 à 30 % en poids de fibres, par rapport au poids de la couche.

5. Film polymère selon l'une quelconque des revendications 2 à 4, **caractérisé en ce que** les fibres sont des fibres de cellulose, des fibres de coton, des fibres de polypropylène, des fibres de polyéthylène, des fibres de polyester, des fibres de polyamide, des fibres de polyimide, des fibres de Wollaston ou des fibres d'un silicate de calcium.

6. Film polymère selon l'une quelconque des revendications 1 à 5, **caractérisé en ce que** les fibres ont un longueur dans la fourchette de 10 à 200 µm et un diamètre dans la fourchette de 1,5 à 50 µm et un rapport longueur/diamètre L/D de 5 à 30.

7. Film polymère selon l'une quelconque des revendications 1 à 6, **caractérisé en ce que** les fibres ont un point de fusion qui est supérieur d'au moins 5°C à la température d'extrusion du polymère de matrice ou du mélange polymère/fibres.

8. Film polymère selon l'une quelconque des revendications 1 ou 4 à 7, **caractérisé en ce que** le polymère de la couche contenant des fibres est un polyimide, un polyamide, un polyester ou du PVC.

9. Film polymère selon la revendication 3, **caractérisé en ce que** le polypropylène est un homopolymère de propylène isotactique.

10. Film polymère selon l'une quelconque des revendications 1 à 9, **caractérisé en ce que** le film est multicouche et **en ce que** la couche contenant des fibres est la couche de base et/ou la couche intermédiaire du film.

11. Film polymère selon l'une quelconque des revendications 1 à 10, **caractérisé en ce que** la couche de base et/ou la couche intermédiaire contient des pigments et/ou des agents de remplissage créant des vacuoles.

12. Film polymère selon la revendication 11, **caractérisé en ce que** la couche contenant des fibres contient en supplément des pigments et/ou des agents de remplissage créant des vacuoles.

13. Procédé de fabrication d'un film polymère selon les revendications 1 à 12, **caractérisé en ce qu'**on extrude un mélange d'un polymère thermoplastique et de fibres sur un cylindre de refroidissement, qu'on réchauffe le film préliminaire ainsi obtenu et qu'on l'étire en direction longitudinale ou transversale.

14. Utilisation d'un film polymère selon l'une quelconque des revendications 1 à 12 en tant que film d'emballage.

15. Utilisation d'un film polymère selon l'une quelconque des revendications 1 à 12 en tant que film pour étiquettes.

16. Utilisation d'un film polymère selon l'une quelconque des revendications 1 à 12 en tant que film de contrecollage.

17. Utilisation d'un film polymère selon l'une quelconque des revendications 1 à 12 en tant que film métallisable.
